(19) Europäisches Patentamt
European Patent Office
Office européen des brevets

(11) Publication number: 0 256 819 A2

(12) # EUROPEAN PATENT APPLICATION

(21) Application number: 87307042.9

(51) Int. Cl.$^4$: C 08 F 12/12

(22) Date of filing: 07.08.87

(30) Priority: 08.08.86 JP 185256/86

(43) Date of publication of application: 24.02.88 Bulletin 88/08

(84) Designated Contracting States: DE FR GB

(71) Applicant: TOA NENRYO KOGYO KABUSHIKI KAISHA
1-1 Hitotsubashi, 1-Chome Chiyoda-Ku
Tokyo 100 (JP)

(72) Inventor: Kato, Masayuki
4-4-443, Nishitsurugaoka 1-chome Ooi-machi
Iruma-gun Saitama-ken (JP)

Niwa, Tadashi
4-4-421, Nishitsurugaoka 1-chome Ooi-machi
Iruma-gun Saitama-ken (JP)

Taguchi, Yoshio
385-1, Ooaza Nakatomi
Tokorozawa-shi Saitama-ken (JP)

Imai, Chihiro
49-5, Utsukushigaoka 4-chome Midori-ku
Yokohama-shi Kanagawa-ken (JP)

(74) Representative: Baverstock, Michael George Douglas et al
BOULT, WADE & TENNANT 27 Furnival Street
London, EC4A 1PQ (GB)

(54) **Highly stereoregular poly(p-methylstyrene)s and a process for producing same.**

(57) Poly(p-methylstyrene)s having improved properties, in particular, higher heat resistance, are provided which have an isotactic pentad fraction of at least 70%. The poly(p-methylstyrene)s can be prepared by polymerizing p-methylstyrene in the presence of a catalyst consiting of an activated titanium trichloride composition of titanium trichloride-aluminum halide compound-ether and a trialkylaluminum.

EP 0 256 819 A2

**Description**

HIGHLY STEREOREGULAR POLY(P-METHYLSTYRENE)S AND A PROCESS FOR PRODUCING SAME

This invention relates to a highly stereoregular poly(p-methylstyrene) and to a process for producing same.

A polymer of polystyrene type poly(p-methylstyrene)- (hereinafter referred to as PPMS) is superior in heat resistance to polystyrene and has lately been regarded to be superior to polystyrene in various uses. PPMS has hitherto been produced, in general, by the radical polymerization, anionic polymerization of cationic polymerization of p-methylstyrene (hereinafter referred to as PMS). However, the thus produced polymers show low stereoregularity.

It is an object of the present invention to provide a highly stereoregular PPMS.

It is another object of the present invention to provide a specified PPMS with better properties, in particular, higher heat resistance.

It is a further object of the present invention to provide a process for the production of a novel poly(p-methylstyrene) with a high stereoregularity.

These objects can be attained by a poly(p-methylstyrene) having at least 70% of isotactic pentad fraction.

The accompanying drawings serve to illustrate the principle and merits of the present invention to greater detail.

Fig. 1 is an NMR chart of PPMS of the present invention.

Fig. 2 contains GPC charts of (1) PMS of the present invention and (2) PPMS for comparison.

Fig. 3 and Fig. 4 are NMR charts of PPMS for comparison, in which I, II, III and IV respectively indicated the following peaks:

I...rrrr, II...rrrm, mrrm, III...mrmr, mmrr, rmrr, IV...mmmm, mmmr, rmmr, mmrm.

The inventors of the present Application have found as a result of various studies that the objects of the present invention can be accomplished by polymerizing PMS using a specified catalyst of Ziegler-Natta type. The present invention is based on this finding.

Accordingly, the present invention provides a poly(p-methylstyrene) having at least 70% of an isotactic pentad fraction.

PPMS of the present invention has at least 70% of an isotactic pentad fraction. By "isotactic pentad fraction" is meant an isotactic fraction in terms of pentad sequences in PPMS molecular chain measured using $^{13}C$ - NMR.

Specifically, the isotactic pentad fraction is measured as an area fraction of mmmm pentads peak in all the absorption peaks by the aromatic carbon ($C^1$) adjacent to the principal chain, as described below, in the $^{13}C$ NMR spectra:

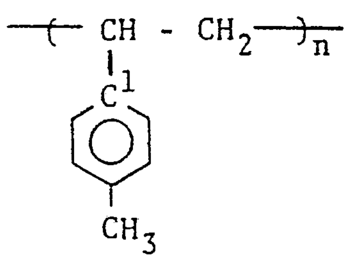

The assignment of the peaks is conducted based on Matsuzaki et al's report in "Makromol. Chem." page 125, Vol. 183 (1982).

This PPMS can generally be prepared by polymerizing PMS in the presence of a catalyst consisting of an activated titanium trichloride composition of titanium trichloride-aluminum halide compound-ether and a trialkylaluminum

The activated titanium trichloride having a smaller content of aluminum and better granular property than the so-called AA-type titanium trichloride commonly used in the polymerization of α-olefins such as propylene has hitherto been known as a catalyst with a higher activity as well as higher stereoregularity in the polymerization of α-olefins.

The activated titanium trichloride can be prepared by reducing titanium tetrachloride with an organo aluminum compound in the presence or absence of an ether and then treating the resulting titanium trichloride with an electron donative compound selected from such compounds such as ethers, esters, ketones, carboxylic acids, amines and the like and/or a metal tetrahalide such as titanium tetrachloride, silicon tetrachloride, stannic tetrachloride and the like, a halogen-containing compound such as halogenated hydrocarbons or elementary halogen, as disclosed in, for example, Japanese Patent Application OPI (Kokai) Nos. 34478/1972, 64170/1973, 16297/1976, 16298/1976, 76196/1976, 123796/1976, 107294/1977, 113393/1977 and 14192/1978.

Above all, activated titanium trichlorides are preferably used in the present invention, which are obtained by the procedures disclosed in Japanese Patent Application OPI (Kokai) Nos. 107294/1977 and 14192/1978,

namely, comprising reducing titanium tetrachloride with organoaluminum compounds and then treating the thus resulting titanium trichloride with ethers and halogenated hydrocarbons.

Examples of the organoaluminum compound used for the reduction of titanium tetrachloride in the present invention are ethylaluminum dichloride, diethylaluminum chloride, ethylaluminum sesquichloride or mixtures thereof and the like.

Examples of the ether similarly used are diethyl ether, diisobutyl ether, di-n-butyl ether, diisoamyl ether, di-n-amyl ether, di-n-hexyl ether, di-2-ethylhexyl ether, di-n-octyl ether, diphenyl ether, anisole and the like.

Examples of the halogenated hydrocarbon similarly used are dichloroethane, trichloroethane, tetrachloroethane, hexachloroethane, dichloropropane, tetrachloropropane, hexachloropropane, octachloropropane, dichlorobutane, trichloropentane, dichlorobenzene, dichloroethylene and the like.

As one component of the polymerization catalyst, namely, trialkylaluminum, there can be used triethylaluminum, triisobutylaluminum, tri-n-butylaluminum and the like. Such a trialkylaluminum is ordinarily used in a proportion of 1 to 100 gram moles to 1 gram atom of titanium in the activated titanium trichloride.

In the polymerization catalyst used in the present invention, there can be used, in addition to the above described two components, at least one third component selected from organic carboxylic acid esters such as methyl, ethyl, propyl, butyl, isobutyl and hexyl esters of acetic acid, butyric acid, acrylic acid, methacrylic acid, benzoic acid, toluic acid, anisic acid and phthalic acid. The organic carboxylic acid ester is generally used in a proportion of 0.01 to 1.0 mole to 1 mole of an organoaluminum compound.

In a preferred embodiment of the present inven tion, PPMS can ordinarily be prepared by polmerizing PMS at -20 °C to +150 °C, preferably 20 to 100 °C for 0.1 to 10 hours, preferably 0.5 to 5 hours in the presence of an inert hydrocarbon such as hexane, heptane, octane, cyclohexane, benzene, toluene or xylene using the above described polymerization catalyst. PMS used as a starting material is preferably one having a para-isomer content of at least 95 %.

PPMS obtained by the above described method has an isotactic pentad fraction of at least 70 %, preferably at least 90 %, more preferably at least 95 %, a weight average molecular weight ( $\bar{M}w$) of at least 20 x $10^4$, preferably at least 50 x $10^4$, more preferably at least 100 x $10^4$, most preferably 100 x $10^4$ to 500 x $10^4$, and a molecular weight distribution ( $\bar{M}w/\bar{M}n$, $\bar{M}n$: number average molecular weight) of 10 to 100, preferably 20 to 50.

The stereoregular PPMS of the present invention is superior with respect to methanical properties, in particular, heat resistance as compared with the prior art PPMS.

The following examples are given in order to illustrate the present invention in greater detail without limiting the same. The isotactic pentad fraction, molecular weight and molecular weight distribution of PPMS according to the present invention are measured by means of the following apparatus:

Isotactic Pentad Fraction

$^{13}$C-NMR

Apparatus Type: NMR spectrometer equipped with : Fourier transform accessory type XL-200 manufactured by Varian Co.

Condition: in o-dichlorobenzene at 135 °C, 60 ° pulse, pulse interval 5.0 sec., 10 thousands transients

Molecular Weight, Molecular Weight Distribution

GPC

Apparatus Type: 150 C type GPC manufactured by Waters Co.

Condition: column GMH 6 manufactured by Toyo Soda Kogyo KK; solvent o-dichlorobenzene; 135 °C (in terms of polystyrene)

The Vicat softening point of a sample is measured according to ASTM D 1525 after annealing the sample at 170 °C for 5 hours.

Example 1

Preparation of Activated Titanium Trichloride

In a four necked flask sufficiently purged with nitrogen were charged 25 ml of titanium tetrachloride and n-heptane in such a manner that the concentration of titanium tetrachloride was 60 %. This flask was immersed in a bath at a low temperature and to the flask was dropwise added diethylaluminum chloride diluted to 60 % with n-heptane so that it was equimolar to the above described titanium tetrachloride, while stirring and keeping the reaction temperature at -5 °C to 0 °C. After the dropwise addition of the diethylaluminum chloride, the mixture was successively stirred for 1 hour at -5 °C to 0 °C, the temperature was raised to 65 °C in 1 hour and the stirring was continued at 65 °C for another 1 hour. The reaction mixture was subjected to decantation to separate a solid and liquid and the solid was washed 4 times with n-heptane to yield a red-violet reduced solid.

The thus reduced solid component was then mixed with a solution of di-n-butyl ether and hexachloroethane in n-heptane respectively in a proportion of 1.0 gram mole and 0.7 gram mole to 1 gram atom of titanium in the reduced solid and stirred at 85 °C for 5 hours. The resulting mixture was subjected to decentation to separate

a solid and liquid and the solid component was then washed with n-keptane 5 times, thus obtaining 32 g of activated titanium trichloride.

Polymerization of PMS

100 ml of n-heptane was charged in an autoclave purged with nitrogen gas and heated to 70 °C. Then, 96.8 mg of the above described activated titanium trichloride, 3.6 millimols of triethylaluminum (TEAL) and 0.18 millimol of ethyl benzoate were in order added thereto and finally, 40 g of PMS (p-isomer: 97 %; m-isomer: 3 %) was added thereto with agitation to initiate the polymerization. After 1 hour, 400 ml of toluene was added to the reaction mixture to dissolve the reaction product. This solution was poured to methanol with a volume of 20 times as much as the solution to precipitate a polymer, which was then filtrated and dried to obtain PPMS of the present invention with a yield of 14 %.

Fig. 1 shows the $^{13}C$-NMR spectra of $C^1$ carbon of the aromatic ring in the resulting PPMS, namely, a single peak substantially corresponding to mmmm pentad whose isotactic pentad fraction is 97%. The GPC chart of the resulting PPMS is shown in Fig. 2 (1), from which it is given that $\bar{M}w = 260 \times 10^4$ and $\bar{M}w/\bar{M}n = 31$. The resulting PPMS had a Vicat softening point of 149 °C.

Example 2

Polymerization of PMS was carried out in an analogous manner to Example 1 except that PMS was polymerized at a hydrogen pressure of 3 kg/cm$^2$, thus obtaining PPMS with $\bar{M}w = 135 \times 10^4$, $\bar{M}w/\bar{M}n = 27$ and an isotactic pentad fraction of 98 %. The resulting PPMS had a Vicat softening point of 148 °C.

Example 3

Polymerization of PMS was carried out in an analogous manner to Example 1 except using no ethyl benzoate thus obtaining PPMS with a yield of 13 %, $\bar{M}w = 152.3 \times 10^4$, $\bar{M}w/\bar{M}n = 47.6$ and an isotactic pentad fraction of 83 %. Furthermore, the resulting PPMS had a softening point of 140 °C.

Comparative Example 1

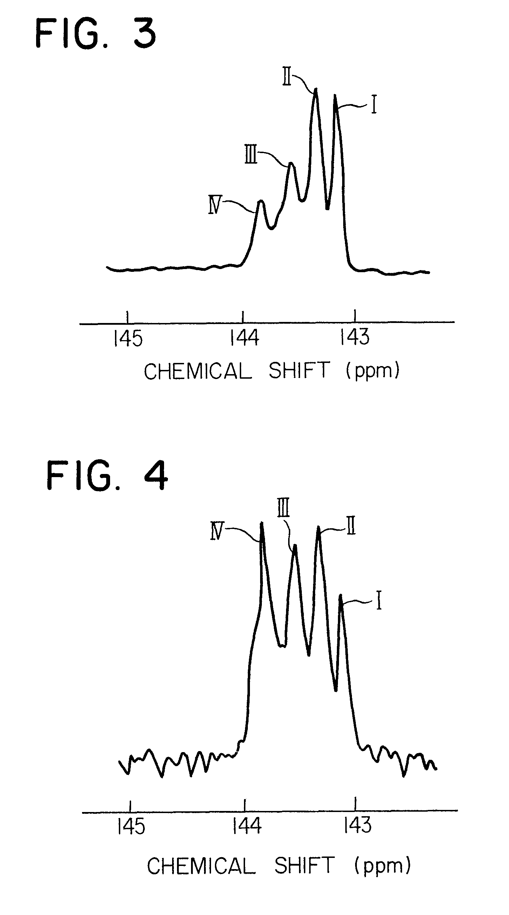

50 ml of toluene, 99.2 g of PMS and 0.2 g of azobisisobutyronitrile were charged in a flask purged with nitrogen gas and subjected to radical polymerization of PMS at 80 °C for 20 hours. The resulting product was similarly treated to Example 1, thus obtaining PPMS with a yield of 43 %. The $^{13}C$-NMR chart of the resulting PPMS is shown in Fig. 3, which is not a single peak as shown in Fig. 1, from which it is evident that the stereoregularity thereof is low. The stereoregularity is calculated from this chart to give results as shown in Table 1. Furthermore, the molecular weight and its distribution, based on the GPC analysis, are also shown in Table 1. The Vicat softening point of the resulting PPMS was 115 °C.

Comparative Example 2

100 ml of toluene, 20 g of PMS and 1.4 ml of a $BF_3$-$O(C_2H_5)_2$ complex (1 : 1) were charged in a flask purged with nitrogen gas and subjected to cationic polymerization of PMS at 30 °C for 1 hour, thus obtaining PMS with a yield of 25 %. These results are shown in Table 1.

Comparative Example 3

Polymerization of PMS was carried out in an analogous manner to Example 1 except using 100.2 mg of the activated titanium trichloride obtained in Example 1, diethylaluminum chloride, instead of TEAL, in a proportion of 3 gram moles to 1 gram atom of titanium, ethyl benzoate in a proportion of 0.3 gram mole to 1 gram atom of titanium and 20 g of PMS, thus obtaining PPMS with a yield of 11 %. The results are shown in Table 1 and the $^{13}C$-NMR chart of the resulting PPMS is shown in Fig. 4. The Vicat softening point of the resulting PPMS was 115 °C.

Comparative Example 4

Polymerization of PMS was carried out at 60 °C for 3 hours using 189.7 mg of titanium tetrachloride, 3.0 millimole of TEAL and 50 g of PMS in 100 ml of n-hexane, thus obtaining PPMS with a yield of 12 %. The results are shown in Table 1 and the GPC chart of the resulting PPMS is shown in Fig. 2 (2).

Comparative Example 5

Polymerization of PMS was carried out in 100 ml of n-hexane at 70 °C for 2 hours using 154 mg of titanium trichloride (AA type, manufactured by Toyo Stauffer Chemical Co.), 3.0 millimols of diethylaluminum chloride and 40 g of PMS and PPMS was thus obtained with a yield of 10 %. The results are shown in Table 1.

Comparative Example 6

Preparation of Catalyst Component

7.2 g of anhydrous magnesium chloride, 23 ml of decane and 23 ml of 2-ethylhexanol were charged in a 200 ml flask purged with nitrogen gas and reacted at 120 °C to form a uniform solution, to which 1.68 ml of ethyl benzoate was then added. 200 ml of titanium tetrachloride was charged in a 400 ml flask purged with nitrogen gas and maintained at -20 °C, during which the above described solution was dropwise added for 1 hour and

after the dropwise addition, the mixture was heated to 90 °C and stirred at 90 °C for further 2 hours. The filtrated solid was suspended in 200 ml of titanium tetrachloride and stirred at 90 °C for 2 hours. The solid component was separated by heated filtration, washed with heated kerosene and n-hexane adequately and dried to obtain a catalytic component with a titanium content of 4.0 %.

Polymerization of PMS

Polymerization of PMS was carried out in an analogous manner to Example 1 except using 189 mg of the catalytic component obtained as described above, 5.0 millimoles of TEAL and 0.24 millimole of ethyl benzoate and adjusting the polymerization time to 2 hours, thus obtaining PPMS with a yield of 5 %. The results are shown in Table 1. The Vicat softening point of the resulting PPMS was 116 °C.

Table 1

| Comparative Example | $\bar{M}w$ (x $10^4$) | $\bar{M}w/\bar{M}n$ | Regularity (%) rrrr | rrrm mrrm | mrmr mmrr rmrr | mmmm mmmr rmmr mmrm |
|---|---|---|---|---|---|---|
| 1 | 29.1 | 3.3 | 35 | 40 | 18 | 7 |
| 2 | 6.2 | 6.9 | 12 | 20 | 42 | 26 |
| 3 | 125.0 | 96.2 | 15 | 30 | 25 | 30 |
| 4 | 42.4 | 35.3 | 15 | 24 | 21 | 40 |
| 5 | 20.2 | 5.5 | 13 | 22 | 38 | 27 |
| 6 | 63.3 | 18.6 | 9 | 14 | 12 | 65 |

**Claims**

1. A poly(p-methylstyrene) having an isotactic pentad fraction of at least 70%.

2. A poly(p-methylstyrene) as claimed in claim 1, wherein the weight average molecular weight ( $\bar{M}w$) is at least 20 x $10^4$ and the molecular weight distribution ( $\bar{M}w/\bar{M}n$) is 10 to 100.

3. A process for the production of a poly(p-methylstyrene) having an isotactic pentad fraction of at least 70%, which comprises polymerizing p-methylstyrene in the presence of an activated titanium trichloride composition of titanium trichloride-aluminium halide compound-ether and a trialkylaluminum.

4. A process as claimed in claim 3, wherein the activated titanium trichloride composition is prepared by reducing titanium tetrachloride with an organoaluminum compound in the presence or absence of an ether and treating the resulting product with at least one compound selected from the group consisting of electron donative compounds, halogen-containing compounds and elementary halogens.

5. A process as claimed in claim 4, wherein the organoaluminum compound is selected from the group consisting of ethylaluminum compound is selected from the group consisting of ethylaluminum dichloride, diethylaluminum chloride, ethylaluminum sesquichloride and mixtures thereof.

6. A process as claimed in claim 4 or claim 5, wherein the ether is selected from the group consisting of diethyl ether, diisobutyl ether, di-n-butyl ether, diisoamyl ether, di-n-amyl ether, di-n-hexyl ether, di-2-ethylhexyl ether, di-n-octyl ether, diphenyl ether, anisole and mixtures thereof.

7. A process as claimed in any one of claims 4 to 6, wherein the electron donative compounds are ethers, esters, ketones, carboxylic acids, amines and mixtures thereof.

8. A process as claimed in any one of claims 4 to 6, wherein the halogen-containing compounds are metal tetrahalides and halogenated hydrocarbons.

9. A process as claimed in claim 8, wherein the metal tetrahalides are titanium tetrachloride, silicon tetrachloride and stannic tetrachloride.

10. A process as claimed in claim 8, wherein the halogenated hydrocarbons are dichloroethane,

trichloroethane, tetrachloroethane, hexachloroethane, dichloropropane, tetrachloropropane, hexachloropropane, octachloropropane, dichlorobutane, trichloropentane, dichlorobenzene, dichloroethylene and mixtures thereof.

11. A process as claimed in any one of claims 3 to 10, wherein the trialkylaluminum is selected from triethylaluminum, triisobutylaluminum, tri-n-butylaluminum and mixtures thereof.

12. A process as claimed in any one of claims 3 to 11, wherein the trialkylaluminum is used in a proportion of 1 to 100 gram moles to 1 gram atom of titanium in the activated titanium trichloride composition.

13. A process as claimed in any one of claims 3 to 12, wherein the polymerizing is carried out at a temperature of -20°C to +150°C for 0.1 to 10 hours in the presence of an inert hydrocarbon selected from the group consisting of hexane, heptane, octane, cyclohexane, benzene, toluene, xylene and mixtures thereof.

0256819

FIG. 1

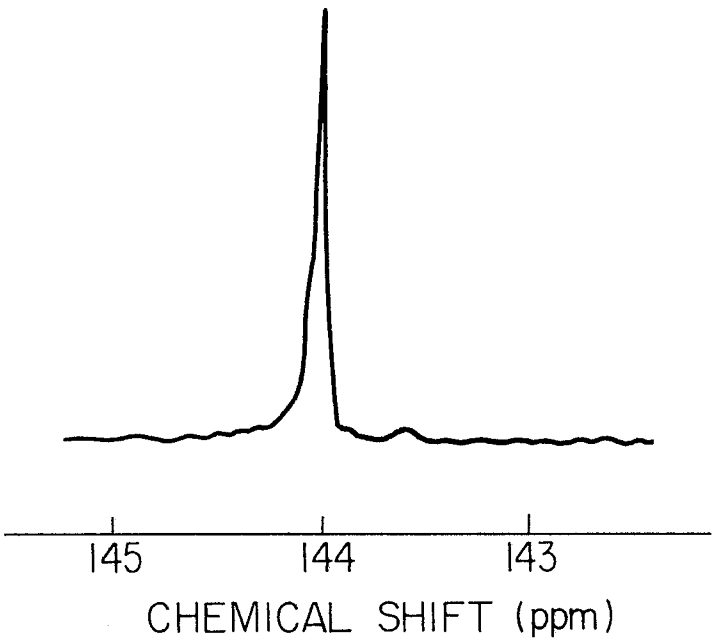


FIG. 2

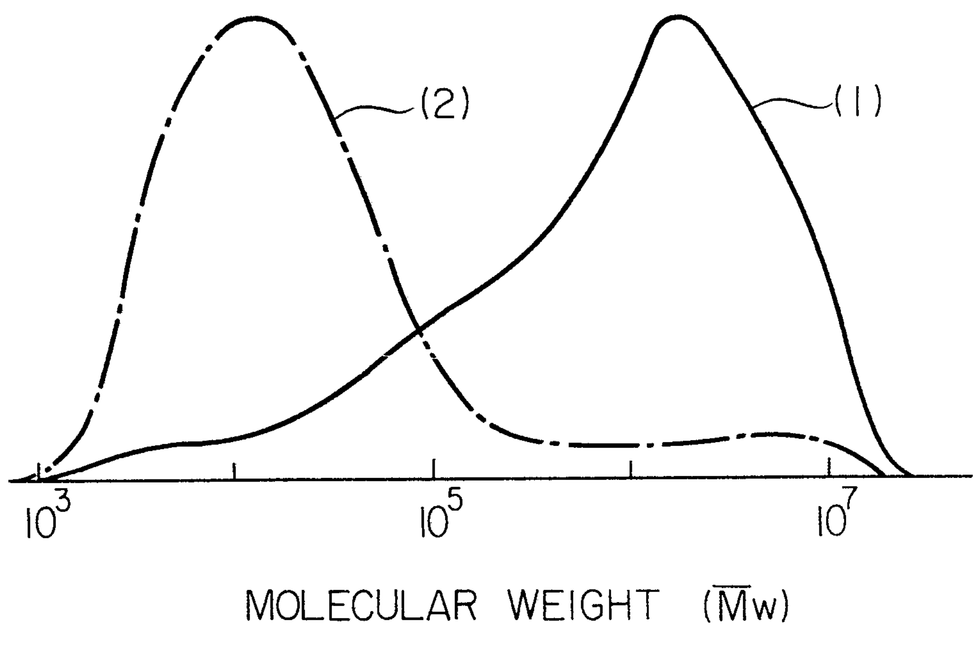

0256819

FIG. 3

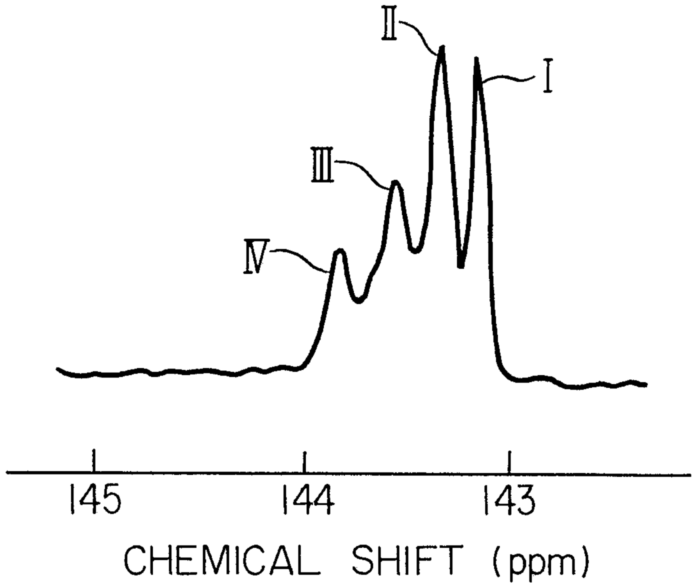


FIG. 4